# EUROPEAN PATENT SPECIFICATION

(11) **EP 0 763 416 B1**
(45) Date of publication and mention of the grant of the patent: **21.10.1998**
(21) Application number: 96304719.6
(22) Date of filing: 26.06.1996
(51) Int. Cl.: B29C 49/00

(54) **Apparatus for trimming the neck of blow molded plastic bottles and method**
Vorrichtung und Verfahren zum Ausschneiden von blasgeformten Flaschen an ihren Hälsen
Appareil et méthode pour détourer le col de bouteilles moulées par extrusion soufflage

(30) Priority: 14.09.1995 US 528347; 20.10.1995 US 546183; 20.10.1995 US 546190
(43) Date of publication of application: 19.03.1997
(73) Proprietor: GRAHAM ENGINEERING CORPORATION, York, PA 17403 (US)
(72) Inventor: Dundas, Dennis L., Dover, Pennsylvania 17315 (US); Moore, Eugene L., Florence, Alabama 35630 (US); Klinedinst, Paul W., Windsor, PA 17366 (US)
(74) Representative: Murgatroyd, Susan Elizabeth

(56) References cited:
- AU-B- 3 205 984
- DE-A- 2 163 144
- DE-A- 3 723 006
- US-A- 3 621 529
- PATENT ABSTRACTS OF JAPAN vol. 9, no. 294 (M-431), 20 November 1985 & JP-A-60 132729 (NIPPON DENSO KK), 15 July 1985,

## Description

The invention relates to an apparatus and method for trimming the neck of a blow molded plastic bottle to provide a smooth circular sealing surface for engaging a complementary bevel ring of a linerless cap threaded onto the bottle neck, according to claims 1 and 12.

Plastic blow molded bottles, particularly bottles filled with milk, juice, and other liquids, are blow molded with a cylindrical neck, a spiral thread on the neck and a blow dome above the neck. The blow dome is connected to the neck by a radially inwardly extending circumferential groove. These bottles have thin plastic walls.

During initial trimming of the blow molded bottle, the blow dome is cut away from the top of the neck at the groove leaving a circumferential flange extending inwardly a short distance from the neck to an inner edge. A pair of opposed V-recesses are formed in the inner flange edge at the parison pinch lines.

Blow molded plastic bottles of the type described are preferably sealed closed using a linerless cap. The cap includes an interior bevel ring which extends into the opening side the neck flange when the cap is threaded onto the neck. The bevel ring is wedged against interior edge or seal surface of the flange to form a seal closing the bottle. While a linerless cap forms a tight seal against circular portions of the inner edge of the flange, the cap does not seal the two V-recesses extending outwardly from the seal surface at the parison pinch lines.

It is possible to seal a bottle with a neck flange having V-recesses using a cap with a resilient liner in the bottom of the cap so that threading of the cap on the neck compresses the liner against the flange to form the desired seal. However, use of a lined cap undesirably increases the cost of the bottle.

It is conventional to trim the inner surface of plastic bottle neck flanges to remove the V-recesses and form smooth circular seal surfaces permitting use of inexpensive linerless caps. Conventional bottle trimming machines remove the V-recesses by reaming the inner flange surfaces. The bottles are blow molded, ejected from the molds and then flash trimmed. In a final trimming step, a rotary reamer is extended into the neck flange and cuts away a circumferential portion of the interior of the neck flange including the V-recess to form a smooth circular seal surface.

Reaming of the neck flange generates plastic chips in the bottle. These chips must be completely removed from the bottle prior to filling. Removal of chips from the bottle is difficult, and, in the case of a bottle with a handle, nearly impossible.

A prior art apparatus is known from DE-A-3 723 006.

In addition to providing a smooth seal surface on the neck flange by reaming, it is also conventional to blow mold plastic bottles using a special mold which includes a cylindrical tool positioned below the neck portion of the mold during molding. The tool is withdrawn outwardly of the neck immediately after blow molding of the bottle to form a smooth cylindrical surface on the interior of the neck suitable for sealing using a linerless cap. Blow molding bottles using this method requires specialized and expensive tooling for each mold. This method is not well adapted for use on high speed multi-mold rotary blow molding machines of the type conventionally used for blow molding thin wall plastic bottles advantageously closed by linerless caps.

According to one aspect, the invention consists in apparatus for trimming the inner edge of a flange extending radially inwardly from the top of the neck of a plastic bottle, the apparatus being characterized by a reverse punch mounted on the forward end of a punch shaft, the reverse punch having a lead end, a trailing end and a circumferential cutting edge on the trailing end; a punch drive engaging the punch shaft for moving the punch into and out of the neck of a plastic bottle to cut a ring of plastic from the inner edge of the neck, the ring surrounding the punch shaft; and means for severing the ring of plastic on the punch shaft.

According to another aspect, the invention consists in a method of trimming a circular ring from the neck flange of a molded plastic bottle, comprising the following steps of:
A) positioning a reverse punch on a punch shaft outside the neck of a plastic blow molded bottle;
B) extending the reverse punch through the neck of the bottle and into the interior of the bottle;
C) flexing the neck flange into the bottle and out of the path of insertion of the reverse punch;
D) withdrawing the reverse punch from the interior of the bottle, cutting a ring of plastic from the inner portion of the neck flange and removing the ring of plastic from the interior of the bottle on the punch shaft;
E) severing the ring of plastic on the punch shaft; and
F) removing the severed ring of plastic from the punch shaft.

The neck trimming apparatus according to the invention extends a reverse punch on a shaft through the flange at the top of a neck in a blow molded bottle to position the punch in an extended position in the bottle, below the flange. The trailing end of the punch has a diameter greater than the diameter of the inner edge of the flange and elastically bends the flange away from the punch during extension. After the punch has been moved past the flange, the shoulder snaps back to its original position, surrounds the shaft and overlies the trailing end of the punch. The shaft and punch are then withdrawn. The outer portion of the flange is held on a circular anvil so that the punch cuts a narrow ring of plastic including the V-recesses from the inside of the flange. The cut-away ring surrounds the shaft. Withdrawal of the shaft and punch moves the cut ring out of the bottle without leaving any plastic chips or debris in the bottle. The ring has a width greater than the depth of the V-recesses formed in the flange during molding to assure that the cut surface on the interior of the flange is smooth and suitable for cooperating with the linerless cap to form a tight seal closing the bottle. The ring is severed, removed from the shaft and discarded.

In a first disclosed embodiment, rings cut from bottles are captured on the shaft, and are severed into circumferential sections which are conveyed from the machine to a scrap receptacle. The withdrawal of the punch forces the rings against a number of fixed cutting blades which sever the rings into segments for discharge.

In a second disclosed embodiment, each ring is removed from the punch shaft by a specialized ring stripper without forming chips. The stripper extends through a slot in the punch end of the shaft and is movable transversely of the punch shaft to grip a leading portion of the ring, shift the portion transversely, and then sever a trailing portion of the ring to permit the severed ring to be pulled from the shaft in one piece for discharge.

In a third disclosed embodiment, a ring stripper includes a hook mounted on one side of the punch shaft above the ring. The hook extends into the ring and is then moved away from the shaft to engage and pull the ring from the shaft. This movement pulls a portion of the ring against a blade to sever the ring to permit the hook to strip the severed ring from the punch shaft in one piece. The severed ring is transported to a suitable collection container.

The invention will be described by way of example with reference to the accompanying drawings, in which:-
Figure 1 is a side view, partially broken away, of a first embodiment of the neck trimming apparatus;
Figure 2 is an enlarged sectional view taken along line 2--2 of Figure 1;
Figures 3, 4, and 5 are sectional views taken along line 3--3 of Figure 1 showing the operation of the trimmer;
Figure 6 is a side view taken along line 6--6 of Figure 1;
Figure 7 is a side view of the top of a blow molded bottle with attached blow dome;
Figure 8 is a view similar to Figure 7 after trimming away the blow dome;
Figure 9 is a top view taken along line 9--9 of Figure 8;
Figure 10 is a sectional view similar to Figure 8 with a linerless cap threaded on the bottle neck;
Figure 11 is a partial vertical sectional view taken through a second embodiment of the neck trimming apparatus;
Figure 12 is a sectional view taken along line 12--12 of Figure 11;
Figure 13 is a view similar to Figure 11 illustrating extension of the reverse punch;
Figure 14 is a sectional view taken along line 14--14 of Figure 13;
Figures 15 and 16 are views similar to Figures 13 and 14 illustrating stripping away of a cut ring;
Figures 17 and 18 are similar to Figure 11 further illustrating stripping away of the ring using the second embodiment;
Figure 19 is a partial vertical sectional view taken through a third embodiment of the neck trimming apparatus;
Figure 20 is a sectional view taken along line 20--20 of Figure 19;
Figures 21, 22 and 23 are views similar to Figure 19 showing operation of the neck trimming apparatus of the third embodiment.

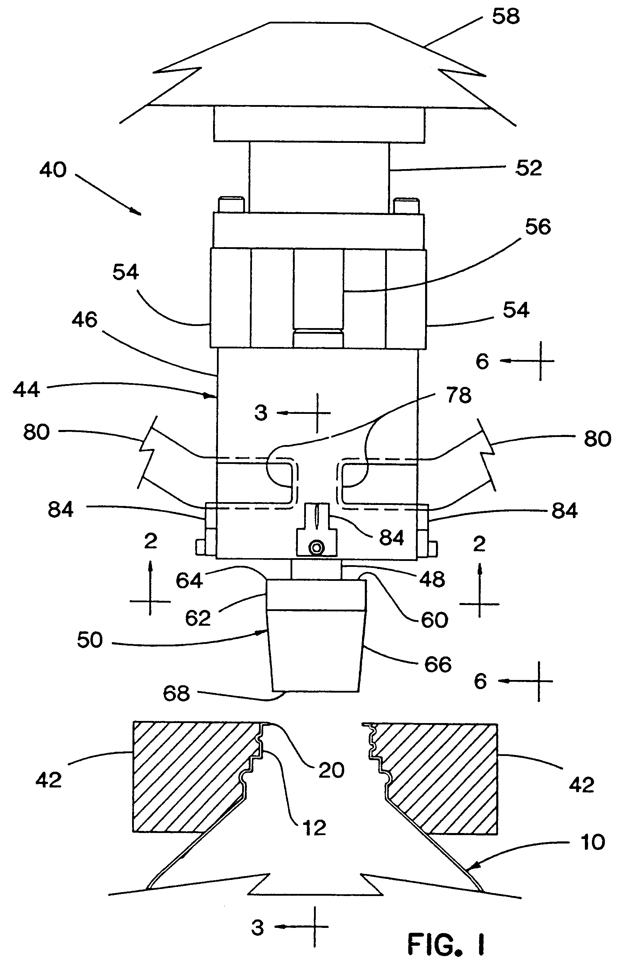

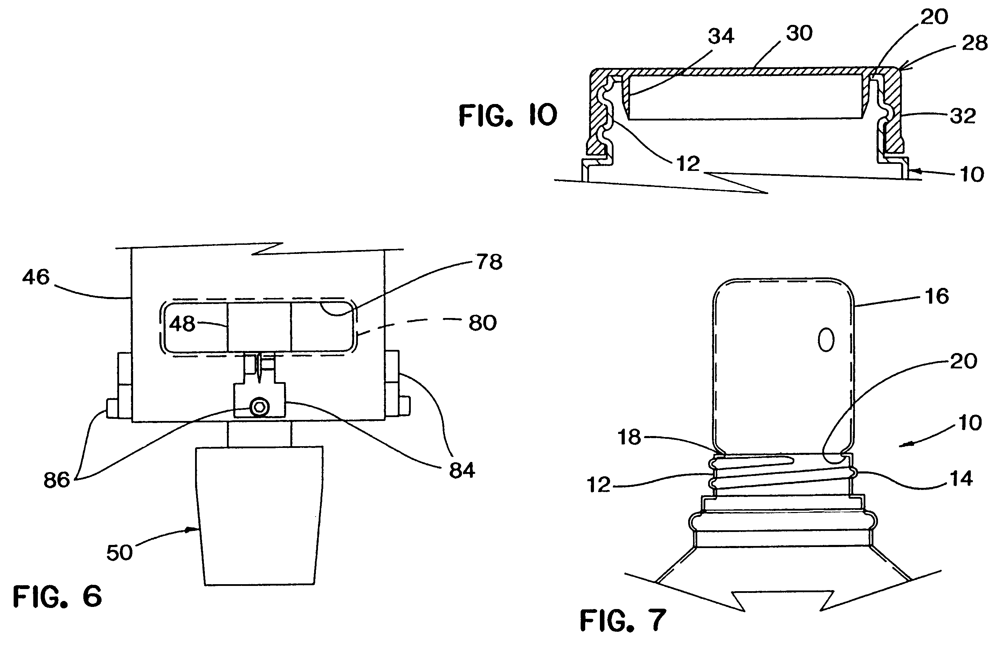

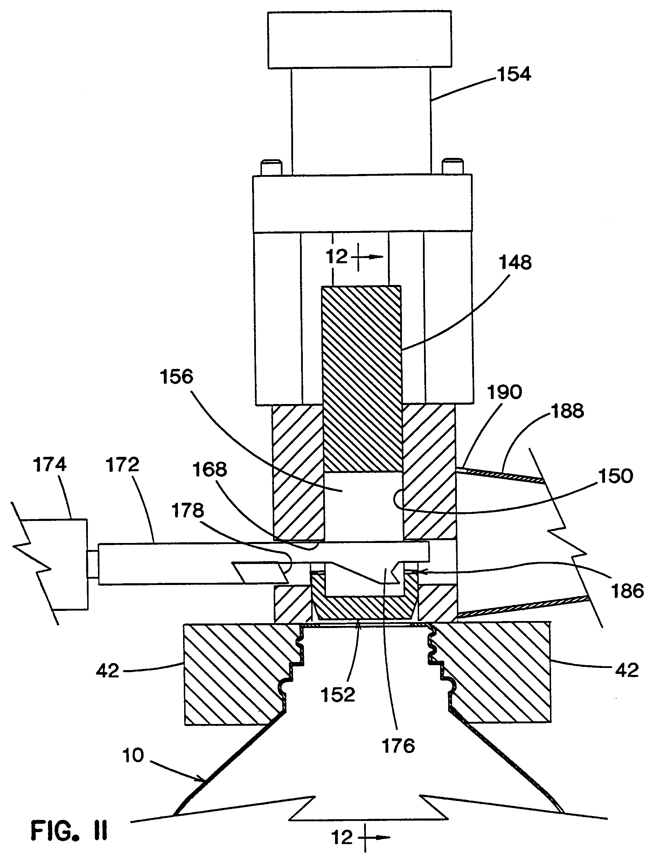

Figures 1 through 6 of the drawings illustrate the first embodiment of a bottle neck trimming apparatus for trimming a thin ring from the interior circumference of a flange located at the top of plastic bottle 10 shown in Figures 7-10. The bottle is preferably formed by blow molding and has relatively thin walls approximately 0.64 mm (0.025 inches) thick. Figures 7-10 illustrate the top of the bottle including a cylindrical neck 12 having an exterior thread 14 wrapped around the neck. When ejected from the blow molding machine, bottle 10 includes a blow dome 16 which is joined to the top of the neck at a circular groove 18 extending around the neck. During initial trimming of the bottle, the blow dome is severed from the neck at the bottom of groove 18 so that the bottom of the groove forms a circumferential flange 20 extending inwardly from the top of neck 12. A pair of 180 degree-opposed V-recesses 22 are formed on the inner edge 24 of flange 20. The V-recesses are the consequence of blow molding a bottle having a neck with a diameter less than the diameter of the parison from which the bottle is blow molded. The neck trimming apparatus disclosed herein trims away narrow rings of plastic from the inner edge of flange 20 along circular trim line 26 located radially outwardly of the V-recess to form a new completely circular inner edge on the flange suitable for forming a tight seal with linerless cap 28 as shown in Figure 10.

Linerless cap 28 includes a circular top 30, a cylindrical side 32 joined to the top, an interior thread recess engageable with bottle thread 14 and a circular ring 34 having an outwardly facing bevel surface engaging the inner edge of bottle flange 20 to form a tight seal between the bottle and cap. The cap is threaded on neck 12 of a trimmed bottle 10 as shown in Figure 10. Bevel ring 34 tightly seals against the trimmed inner edge of flange 20.

Referring now to Figures 1-6, trimming apparatus 40 includes a pair of neck clamp jaws 42 and a suitable drive, not illustrated, operable to open and close the jaws so that the neck of bottle 10 is confined between the jaws with the top of the jaws flush with the top of the bottle neck 12 and flange 20. See Figure 1.

Apparatus 40 also includes a punch assembly 44 comprising a body 46, a punch shaft 48 extending vertically through the body, a reverse punch 50 mounted on the forward end of shaft 48, and a punch drive cylinder 52 mounted on the top of body 46 by suitable spacers 54. Cylinder 52 is preferably operated by compressed air. The rear end of shaft 48 is joined to rod 56 of cylinder 52.

The upper end plate of cylinder 52 is secured to support plate 58, which may be the upper platen of a bottle deflashing machine. Vertical movement of plate 58 moves assembly 44 toward and away from neck clamp jaws 42. Extension and retraction of cylinder 52 extends and retracts reverse punch 50 relative to the jaws.

The reverse punch 50 is symmetrical around the longitudinal axis of the shaft 48 and includes a flat circular trailing end 60, a cylindrical upper portion 62 joining end 60 at a sharp circular cutting edge 64, an inwardly tapered or frusto-conical lower portion 66 and a leading end 68. The leading end faces jaws 42. The trailing end 60 and edge 64 face away from the jaws.

The diameter of leading end 68 is less than the interior diameter of bottle flange 20 as molded, in order to facilitate free piloting of the leading end of the punch into the neck opening defined by the inner flange edge 24 after severing of the blow dome.

The diameter of the upper portion 62 and cutting edge 64 is greater than the diameter of the leading end and is also greater than the diameter of flange inner edge 24.

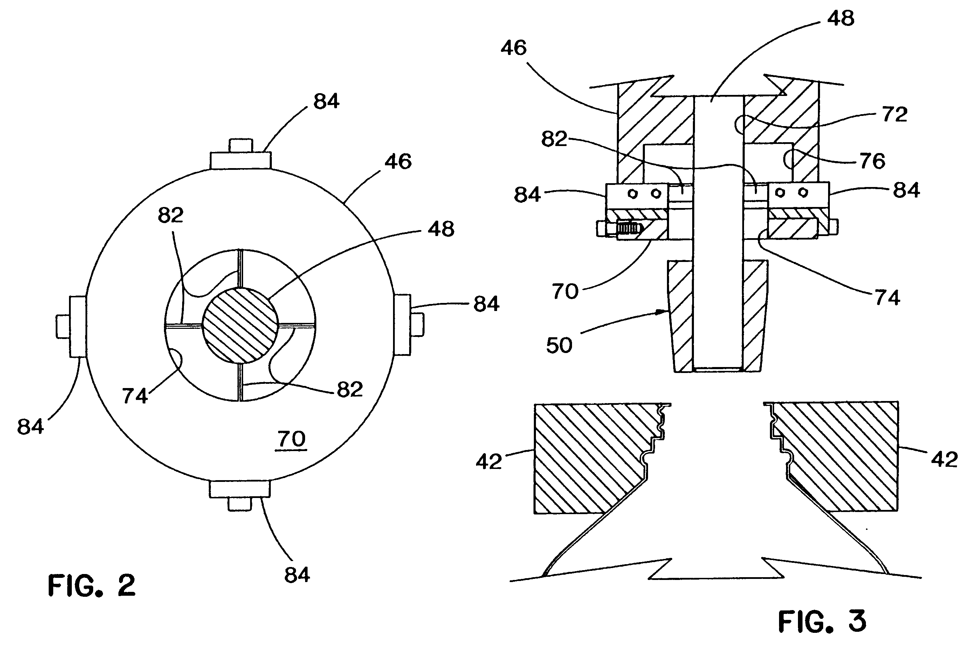

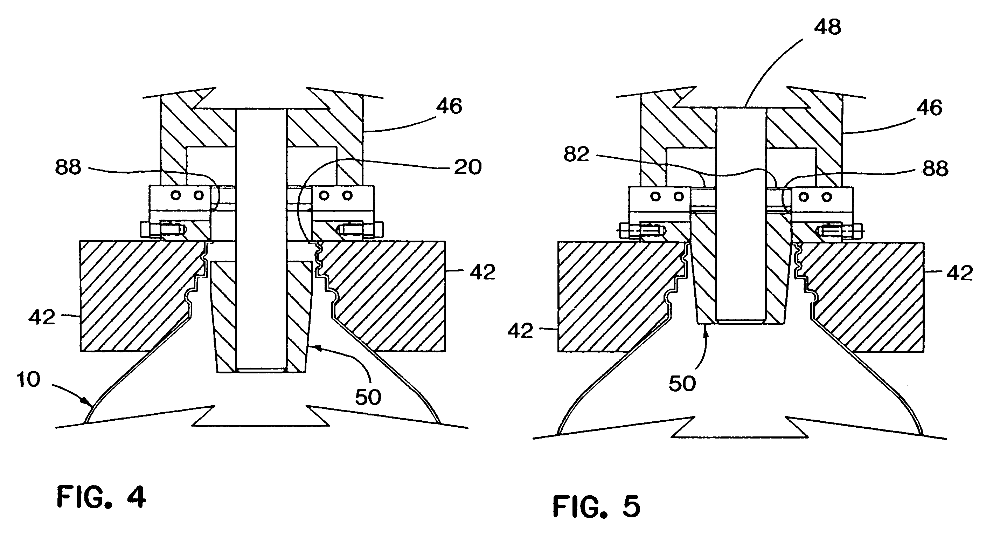

Punch assembly body 46 includes a flat lower anvil face 70 located above and parallel to the top surfaces of clamp jaws 42. The punch shaft 48 is slidably fitted in bore 72 extending through the upper portion of body 46, as shown in Figure 3. Anvil bore 74 extends inwardly from face 70. The diameter of the anvil bore is slightly greater than the diameter of the upper portion and cutting edge 64 of punch 50 to permit retraction of the punch into the bore as shown in Figure 5. The upper end of the anvil bore opens into an enlarged chip discharge chamber 76 which extends laterally to two discharge ports 78 located on opposite sides of body 46. Vacuum manifolds 80, shown in Figures 1 and 6, surround ports 78 and are connected to a vacuum source (not illustrated) to assure a flow of air up through the anvil bore 74, chamber 76, through the ports 78 and then along the manifolds to the vacuum source when the punch 50 is out of the anvil bore.

Four 90-degree spaced blades 82 are mounted on the lower end of body 46 and extend into the upper end of anvil bore 74 as shown in Figures 2 and 3. The blades present sharp cutting edges facing the trailing end of reverse punch 50. Each blade is mounted on a removable carrier 84, shown best in Figures 3-6. The carriers are secured to the lower end of body 46 by screws 86 to facilitate blade replacement as required.

The operation of neck trim apparatus 40 will now be described.

Following trimming away of the blow dome of bottle 10, as previously described, the bottle 10 is positioned between open neck clamp jaws 42 which are then closed to secure the bottle in place. At this time, cylinder 52 is extended to position reverse punch 50 below the anvil face of body 46. Support plate 58 is in the up position to locate the leading end of the punch a distance above the top of the clamp jaws. The punch is above the opening at the top of bottle neck 12 and in axial alignment with the bottle neck. This position is shown in Figure 1.

Plate 58 is then lowered to lower assembly 44 and seat the anvil face 70 of body 46 against the top of the clamp jaws 42 as shown in Figure 4. Downward movement of the punch assembly first extends the leading end of the reverse punch freely into the opening at the top of the bottle neck defined by inner flange edge 24. Continued downward movement of the reverse punch brings the frusto-conical surface of lower portion 66 into engagement with flange edge 24. Portion 66 elastically bends the flange 20 downwardly to enlarge the interior opening and permit complete passage of the punch 50 through the flange. The flange is formed from a plastic wall having a thickness of approximately 0,06 cm (0.025 inches), permitting elastic deformation during insertion of the punch into the bottle. After the punch is fully inserted, the plastic snaps back and returns to its former radial inward shape with the inner edge 24 positioned above the cutting edge 64 on the trailing end of the reverse punch. The top of the flange located radially outwardly of trim line 26 rests flush on body anvil face 70. See Figure 4.

Following insertion of the reverse punch through the flange 20 and into the bottle, as shown in Figure 4, cylinder 52 is retracted to withdraw the reverse punch from the position of Figure 4 to the position of Figure 5. Upward withdrawal movement of the reverse punch moves a trailing end of the punch and cutting edge up against the innermost portion of flange 20 to shear a thin circular ring 88 from the inside of the flange along trim line 26. The flange outwardly of the trim line is held against upward movement by an anvil face 70. The trim line 26 is located radially outwardly of the two V-recesses 22, thereby assuring that the newly trimmed inner edge of flange 20 is cylindrical and smooth to permit forming a tight seal with the bevel ring 34 of linerless cap 28.

After severing of ring 88 from the inner edge of flange 20, continued retraction of the reverse punch 50 into bore 74 moves the ring up and into engagement with the cutting edges of the blades 82. Full retraction of cylinder 52 positions the trailing end 60 of the reverse punch a few thousands of an inch below the cutting edges of the blades so that the ring 88 is impaled on the blades and partially severed by each blade. Retraction of the reverse punch is stopped below the blades to assure that the punch does not contact and injure the blades.

After full retraction of the reverse punch, the cycle of operation of the neck trim apparatus is completed by returning plate 58 to the uppermost position, extending cylinder 52 to re-extend the reverse punch of the position of Figure 1 and opening of the neck clamp jaws to release the trimmed bottle 10.

During trimming of the next bottle presented to apparatus 40, the reverse punch will sever and move a second ring 88 up against and into engagement with the four blades 82. The upward movement of the second ring will force the first ring further up against the blades to sever the first ring into four relatively small segments. The second ring will then be impaled on the blades, but not severed by the blades. When the reverse punch is extended outwardly of the anvil bore 72, the vacuum source will draw air up through the bore 72, chamber 76, port 78, and manifolds 80 to entrain the small ring segments and carry them away from the trim apparatus to a scrap container.

The disclosed trimming apparatus extends and retracts the reverse punch using a punch drive including cylinder 52 and the movable plate 58. If desired, the reverse punch may be extended into bottle 10 and retracted from the bottle, cutting away a ring 88, by a single drive element, which may be a fluid-drive cylinder. A suitable anvil may be provided to hold the top of the flange against movement during retraction of the punch and cutting away of the plastic ring.

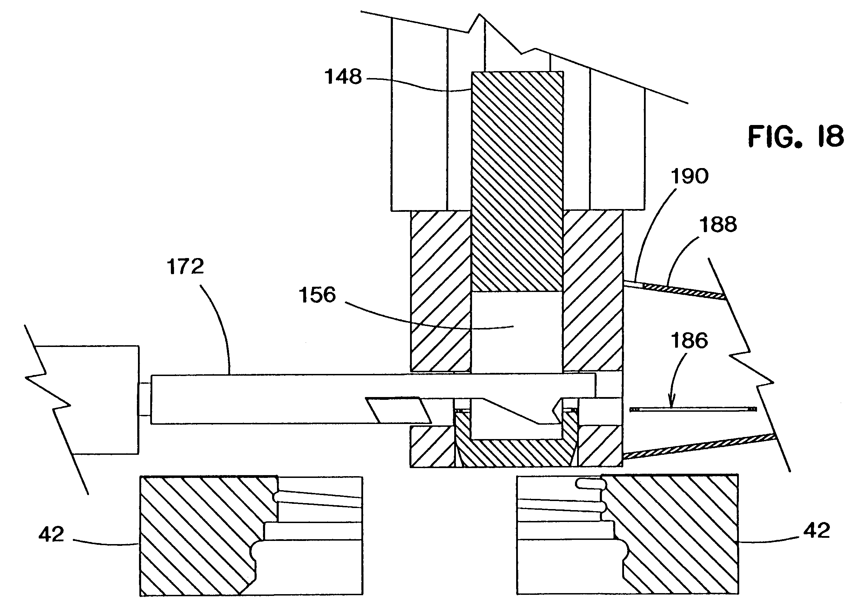

Figures 11 through 18 of the drawings illustrate a second embodiment of a bottle neck trimming apparatus 140 for trimming a thin ring from the interior circumference of a flange located at the top of plastic bottle 10. Trimming apparatus 140 includes a pair of neck clamp jaws 42 and a suitable drive, not illustrated, operable to open and close the jaws so that the neck of bottle 10 is confined between the jaws with the top of the jaws flush with the top of the bottle neck 12 and flange 20.

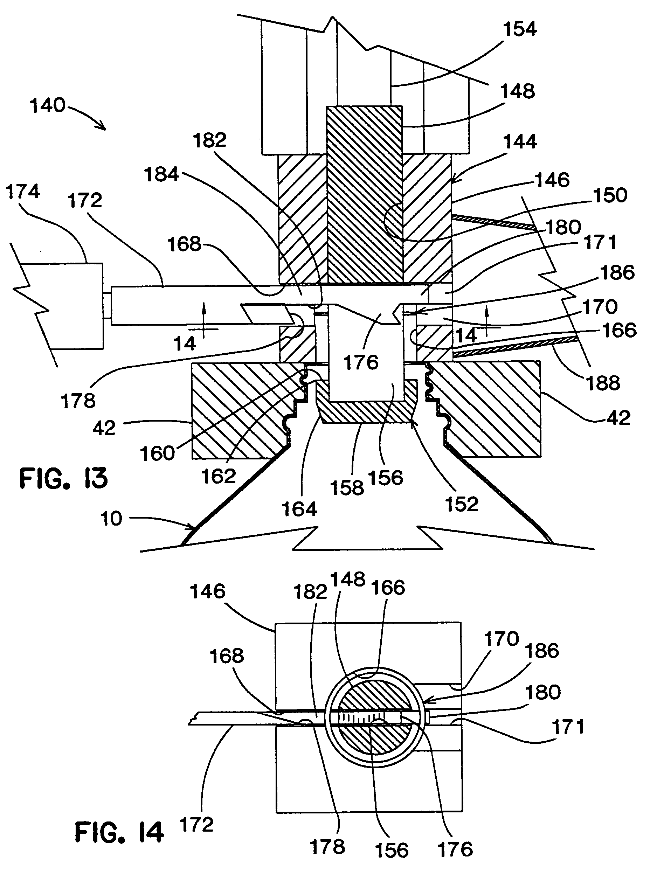

Neck trim apparatus 140 includes a punch assembly 144 having a body 146 with a punch shaft 148 extending vertically through shaft bore 150 formed in the body similar to shaft 48 and bore 72 of the first embodiment. Reverse punch 152 is mounted on the lower end of shaft 148. Shaft drive 154, similar to drive 54 of the first embodiment, is mounted on the upper end of the punch shaft and is operable to extend and retract the reverse punch between the retracted position shown in Figure 11 and the extended position shown in Figure 13.

The reverse punch 152 is symmetrical around the longitudinal axis of the shaft 148 and includes a circular small diameter lead end 158, a circular large diameter trailing end 160, a sharp circular cutting edge 162 at end 160 and an inwardly tapered or frusto-conical portion 164 between ends 158 and 160. Anvil bore 166 in body 146 surrounds the lower end of punch shaft 148 and has a diameter slightly larger than the maximum diameter of reverse punch 152. The punch has a close, sliding fit in the anvil bore when retracted.

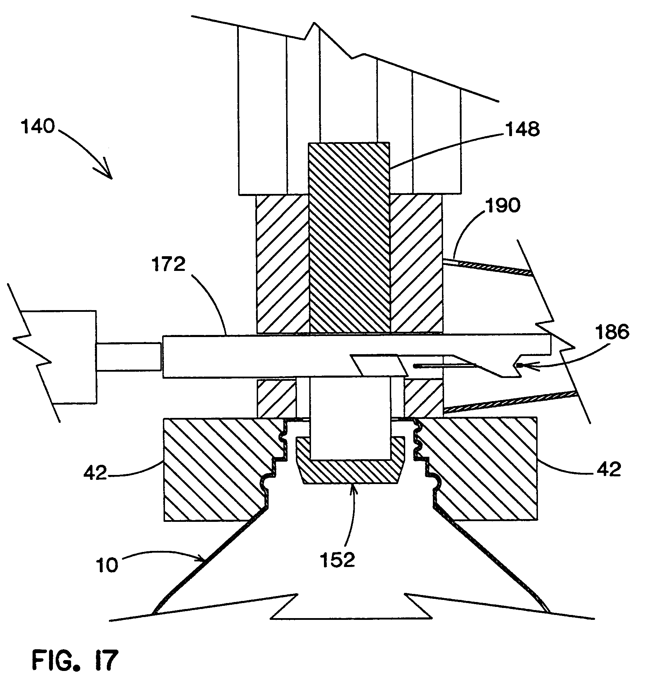

As illustrated in Figure 11, rectangular stripper passage 168 extends from the left side of body 146 to anvil bore 166. An enlarged discharge passage 170 extends from the right side of body 146 to the anvil bore. Narrow bar groove 171 is located at the top of passage 170. Elongate ring stripper slide bar 172 has a sliding fit in stripper passage 168 and extends to the left of body 146 to a stripper drive 174 which reciprocates the stripper back and forth in passage 168 between the retracted position shown in Figure 11 and the extended position shown in Figure 17. Drive 174 may be a power cylinder or other suitable drive. The bar includes a ring mover or hook 176 adjacent lead end 180, and an angled cutting blade 178 spaced a distance inwardly from hook 176. Recess 182 is provided at the bottom of the bar between the hook and the blade.

When drive 174 is retracted bar lead end 180 is located at the side of the anvil bore adjacent discharge passage 170 and extends a short distance into the groove 171 as a pilot. Bar portion 184 extends between the hook and blade and above recess 182 and is located at the opposite side of the anvil bore adjacent passage 168. The lead end 180 and portion 184 form ring stops to prevent possible movement of severed rings 186 up in anvil bore 166 above the hook and blade.

A vacuum manifold 188 is connected to body 146, surrounds the discharge passage 170 and groove 171 and extends from body 146 to a receptacle for collecting rings cut from bottle necks by punch 152 and a vacuum source, neither of which is illustrated. Air inlet port 190 permits air to flow through the manifold to the vacuum source.

The operation of neck trimming apparatus 140 will now be described.

In the start position as illustrated in Figure 11, the neck of bottle 10 is held between neck clamp jaws 42 which are flush on the bottom surface of body 146 with the bottle neck held in coaxial alignment with the axis of the punch shaft 148. Drives 154 and 174 are retracted as shown with punch 152 located in the anvil bore and the ring stripper bar retracted. A plastic ring 186 punched from the previous bottle is held in bore 166 by friction at a level adjacent hook 176 and blade 178. Hook 176 is located in the lower end of punch shaft slot 156 below punch end 160. Cutter blade 178 is located in the stripper passage 168 on the side of the punch shaft away from the discharge passage 170. Slot 156 in punch shaft 148 extends into the reverse punch 152 a distance sufficient to permit the hook to extend freely into the punch when the punch is retracted.

Punch drive 154 is then actuated to extend the reverse punch through the opening in the top of the bottle neck. During extension, the circumferential flange 20 is flexed downwardly and outwardly by the frusto-conical portion 164 of the punch. After the punch is extended past the flange, the flange returns to its original position as shown in Figure 13.

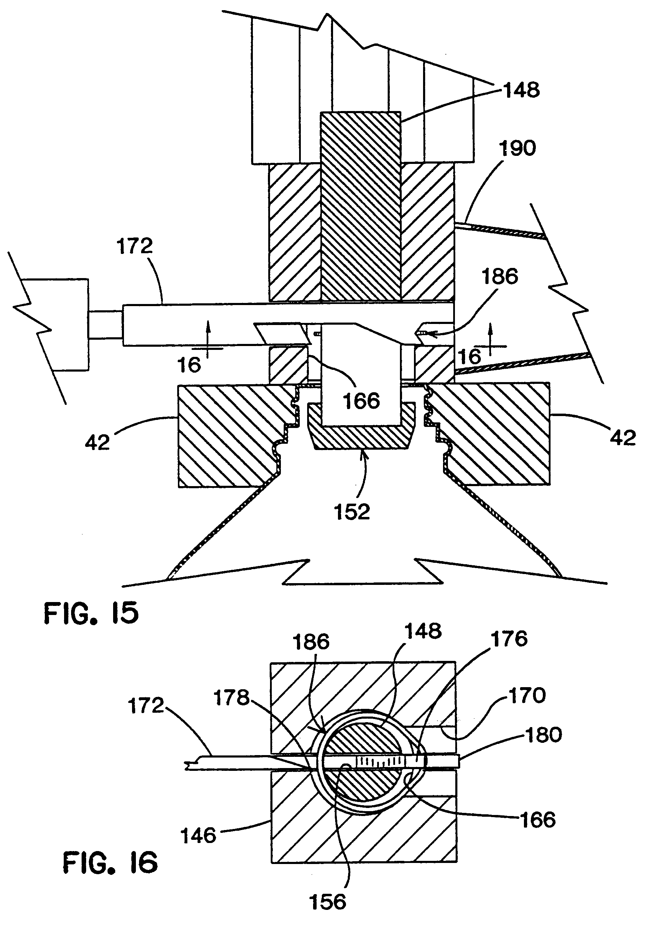

After the reverse punch has been extended into the neck of the next bottle, stripper drive 174 is extended to move ring stripper bar 172 from the retracted position to the extended position. Extension of the ring stripper first moves hook 176 into engagement with the lead portion of ring 186 punched from the prior bottle to move the portion of the ring outwardly from the anvil bore and into the discharge passage 170. This movement of the ring pulls the trailing portion of the ring away from the opposite side of the anvil bore and against the punch shaft at slot 156. See Figure 16. Further extension of drive 174 stretches and holds the ring taut against the punch shaft and moves blade 178 against the taut ring to sever the trailing portion of the ring at the slot. Blade 178 is angled so that the blade lead end is below the ring and the cutting edge slopes away from the lead end to assure that the blade captures and severs the trailing portion of the ring.

Further extension of the stripper drive moves the one-piece severed ring past the punch shaft, out of the anvil bore and discharge passage and into the vacuum manifold 188. The vacuum source draws air into the manifold and away from the punch assembly so that when the severed ring falls free from hook 176, the ring is drawn along the manifold and is captured in a waste receptacle.

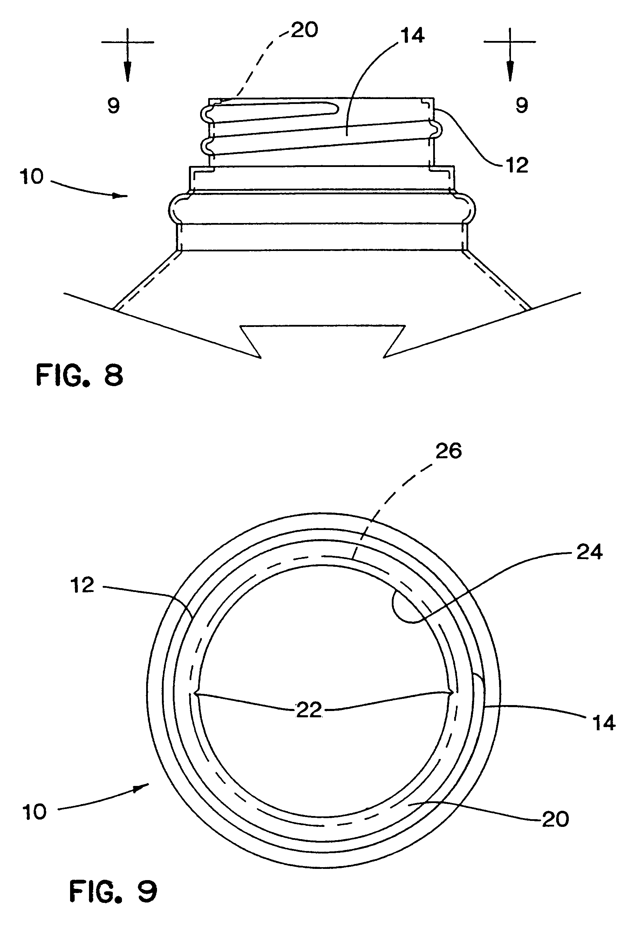

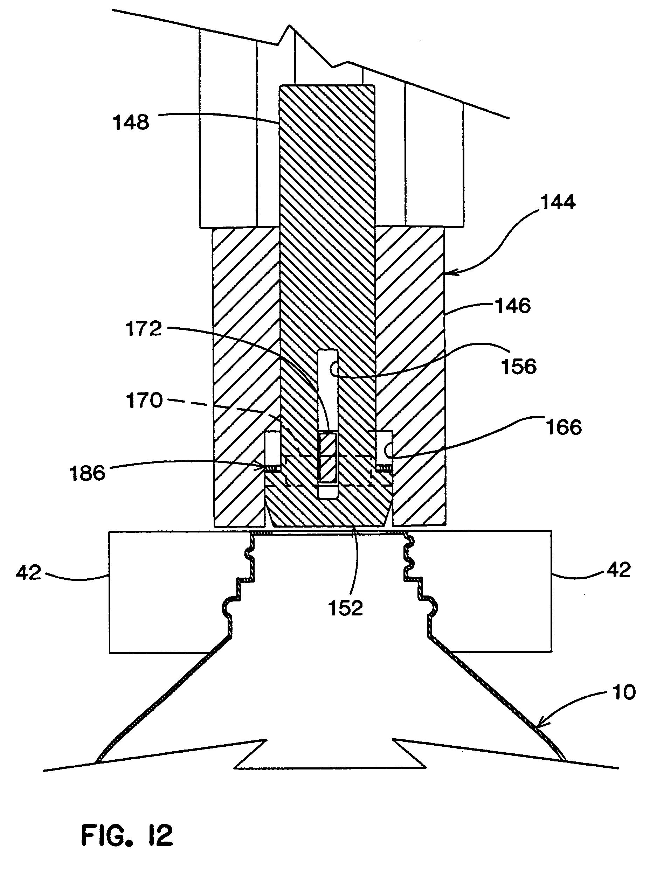

Following stripping of ring 186 from the punch shaft, drive 174 is retracted to return the ring stripper bar 172 to the position of Figure 11. Shaft drive 154 is then reversed to retract the punch into the anvil bore and cut a narrow one piece plastic ring 186 from the inner edge of the flange along trim line 26 illustrated in Figure 9. The trailing end 160 of the punch is moved into the anvil bore above the bottom of the stripper passage 168 and discharge passage 170 and past hook 176 as shown in Figures 11 and 12 to position ring 186 in the anvil bore in position to be cut and ejected.

After the reverse punch has been fully retracted into bore 166 to cut ring 186 from the neck flange and position the ring in bore 166 for ejection, the neck clamp jaws 42 are opened to release bottle 10, a new bottle is positioned between the jaws and the jaws are closed on the neck of the bottle. If desired, assembly 144 may be moved away from the neck jaws or the jaws may be moved away from the assembly by a suitable drive during release of the trimmed bottle and pick up of the next bottle. The shaft drive 154 is then extended to move the reverse punch through the neck of the second bottle and initiate the next cycle of operation.

The drawings illustrate the apparatus 10 oriented in a vertical position with the punch shaft extending vertically and the bottle 10 held in a vertical position below the punch shaft. Alternatively, the apparatus may be oriented in a horizontal position with the punch shaft extending horizontally and the neck of bottle 10 held in a horizontal position.

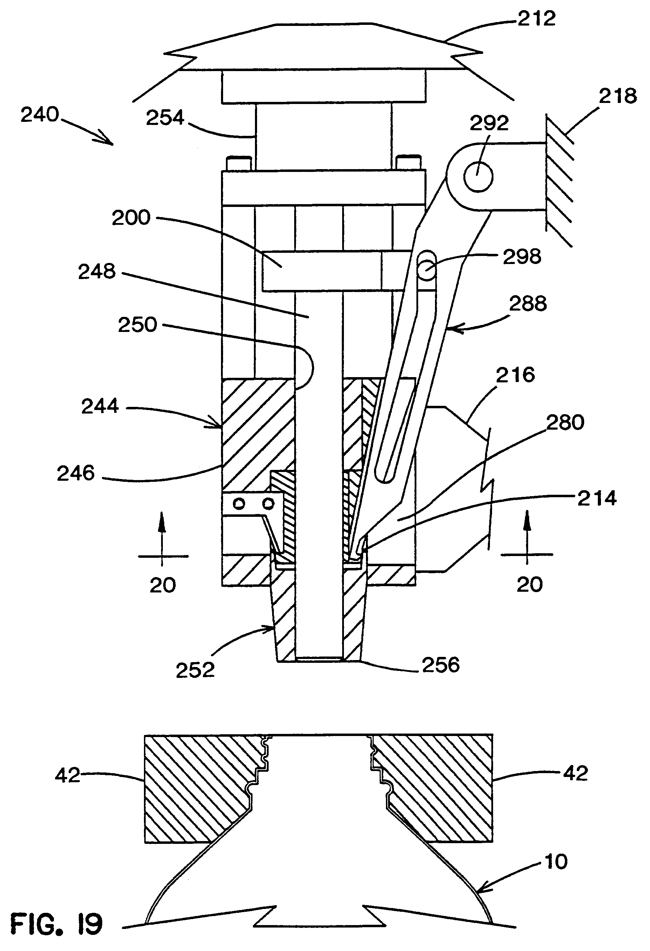

Figures 19 through 23 of the drawings illustrate a third embodiment of a bottle neck trimming apparatus 240 for trimming a thin ring from the interior circumference of a flange located at the top of plastic bottle 10.

Trimming apparatus 240 includes a pair of neck clamp jaws 42 and a suitable drive, similar to the jaws or drive of the first embodiment.

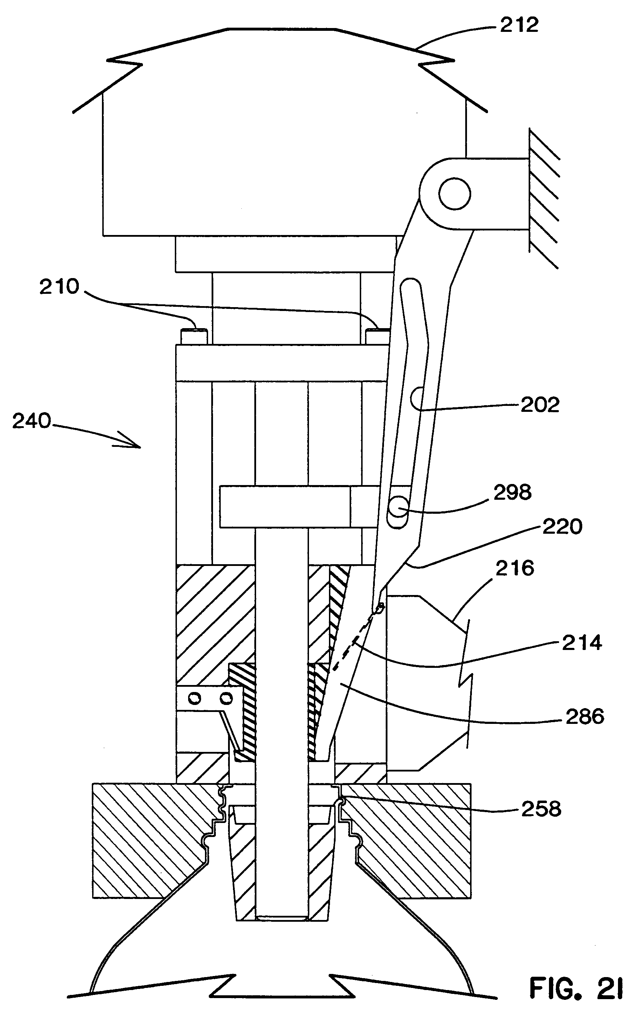

Neck trim apparatus 240 includes a punch assembly 244 having a body 246 with a punch shaft 248 extending vertically through shaft bore 250 formed in the body similar to shaft 48 and bore 72. Reverse punch 252 is mounted on the lower end of shaft 248. Shaft drive 254, similar to drive 154 of the second embodiment, is mounted on the upper end of the punch shaft and is operable to move the reverse punch between the retracted position shown in Figure 19 and the extended position shown in Figure 21. Drive 254 is secured to support 212. A support drive (not illustrated) moves support 212 and assembly 244 up and down vertically. Drive 254 is secured to body 246 by bolts and spacers 210.

The reverse punch 252 and anvil bore 266 are similar in construction to punch 154 and bore 166 of the second embodiment. An anvil recess 264 is provided inside trailing end 258.

Anvil bore 266 in the lower end of body 246 surrounds the lower end of punch shaft 248 and has a diameter slightly larger than the maximum diameter of reverse punch 252. The punch has a close, sliding fit in the anvil bore when retracted.

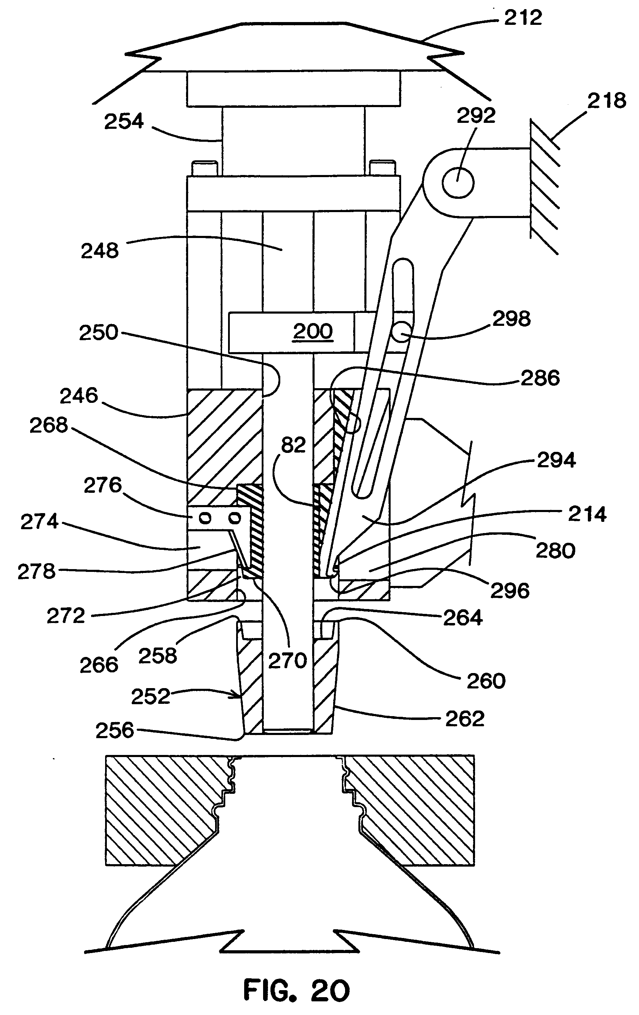

Cylindrical insert 268 is press fitted in the upper end of the anvil bore 266 and defines a lower portion of bore 250. The lower end 270 of insert 268 is spaced inwardly a distance from bore 266 to provide an annular ring retention space 272 shown in Figures 20 and 21. Narrow slot 274 is provided in the side body 246 to the left of the punch shaft 248 as shown in Figure 19. A continuation of slot 274 is formed in the adjacent side of the insert 268. Ring cutting blade 276 is removably mounted in slot 274 and includes an angled cutting edge 278 extending across the space 272. The edge faces down in space 272 and away from the punch shaft and the opposite side of body 246.

A wide ring discharge passage 280 is formed in the opposite or left hand side of body 246 and extends to the anvil bore. A narrower vertical stepped slot 282 is formed in the side of insert 268 adjacent passage 280. A continuation of slot 282 is formed in body 246 above insert 268. The angled edge 278 of blade 276 faces away from passage 280.

Guide insert 284 is fitted in slot 282 and includes an elongate, angled groove 286 extending from the lower end of the insert 268 inside bore 266 to the top of body 246. Groove 286 opens into annular ring retention space 272 across from blade 276 and into the passage 280.

An elongate hook member 288 includes an upper end 290 pivotally mounted on pin 292 on fixed support 218 and a lower end 294 including ring hook 296. The lower end of member 288 is slidably mounted in groove 286. Drive pin 298 extends outwardly from a support member 200 secured to the punch shaft 248 and is moves with the punch shaft. Pin 298 extends into elongate slot 202 formed in the hook member 288 and has a sliding fit in the slot. Slot 202 extends generally between the ends of the hook member and includes a short straight upper portion 204 and a lower portion 206. As illustrated, the upper portion is joined to the lower portion at a shallow angle or bend 208 with the concave side of the slot facing the punch shaft. Vertical movement of shaft 248, either by drive 254 or by the drive for support 212, moves pin 298 along the slot 202. Movement of pin 298 in upper slot portion 204 does not rotate member 288. Movement of pin 298 in lower slot portion 202 rotates the member around pin 292

A vacuum manifold 216 surrounds passage 280 and is connected to a vacuum source (not illustrated). A ring collection receptacle is located in the manifold to collect cut plastic rings discharged from apparatus 240.

The operation of trimming apparatus 240 will now be described.

Figure 19 illustrates trimming an apparatus 240 at the beginning of a cycle of operation. In this position, a narrow circular ring of plastic 214 cut from the neck of a bottle 10 during the prior cycle of operation is friction-held in the ring retention space 272 between the lower end of the insert 268 and anvil bore 266. The ring 214 includes a lead portion adjacent passage 280 and a trailing portion adjacent blade 276. Hook 296 on the lower end of member 288 is located in recess 264 formed on the top of the reverse punch inside and a slight distance below the lead portion of plastic ring 214. The trailing portion of the ring 214 is immediately below angled cutting edge 278 of blade 276. A new bottle 10 to be trimmed is held in closed jaws 42 a distance below the retracted neck punch 252 and in axial alignment with the punch. When the apparatus 240 is in this position, the upper slot portion 204 extends vertically, parallel to the axis of the punch shaft.

Next, the shaft drive 254 is extended to lower the punch shaft and reverse punch to the position of Figure 21, a distance below the lower end of the punch assembly body 246. Downward movement of the punch shaft moves pin 298 down the upper portion 204 of slot 202 to the bend 208 and a slight distance beyond the bend sufficient to rotate the hook 296 outwardly and under the lead portion of ring 214.

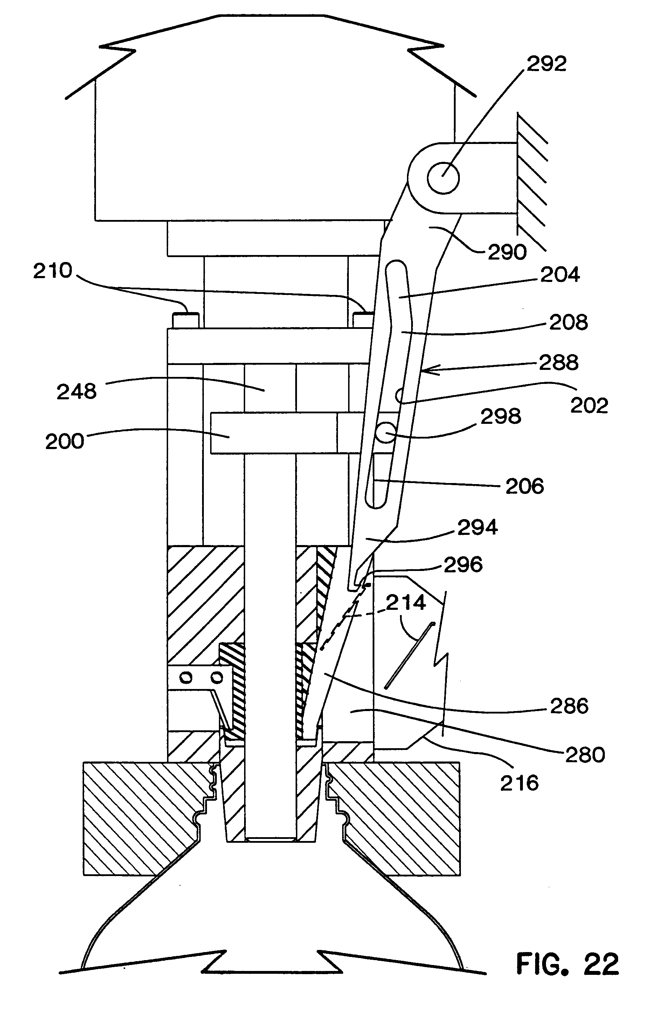

Next, the support 212 is moved down by the support drive (not illustrated) to lower the body 246 and move extended reverse punch 252 toward the bottle 10 held in the clamp jaws. Downward movement of support 212 first pilots the lead end of the reverse punch into the neck opening at the top of the bottle and then moves the frusto-conical portion of the punch past the flange. The frusto-conical portion flexes the flange downwardly and outwardly during insertion to permit passage of the reverse punch into the interior of the bottle to the position shown in Figure 22 where the support 212 is fully lowered and the lower anvil face of body 246 rests flush on the top of the clamp jaws. In this position, the inner ring portion of the neck flange extends into the anvil bore 266 and overlies the trailing end 258 of the reverse punch.

During lowering of the body 246 by support 212, pin 298 is moved down the lower portion 206 of slot 202 to thereby pivot the hook member 288 about fixed pin 292 and move the ring hook 296 outwardly in groove 286. When body 246 is bottomed in the position shown in Figure 22, the hook 296 is located radially outside the upper end of groove 286. During initial movement of the hook relative to the body 246, the hook engages the lead portion of ring 214 and pulls the lead portion of the ring up in the anvil bore and out toward the discharge passage 280, thereby pulling the trailing portion of the ring against the angled cutting edge 278 of blade 276 to sever the trailing portion of the ring. Further downward movement of the body and outward pivoting of the hook strips the severed ring from around the lower insert end 270 and pulls the ring out of the annular space 272 to the position shown in Figure 22 where the ring is in the upper portion of passage 280 adjacent the inlet mouth of vacuum manifold 216 surrounding passage 280. During this movement, hook 296 extends out from groove 286 to engage and move the lead portion of the ring. Air drawn into the mouth of manifold 216 pulls the severed ring 214 from hook 296 so that the ring is entrained and carried to the collection receptacle.

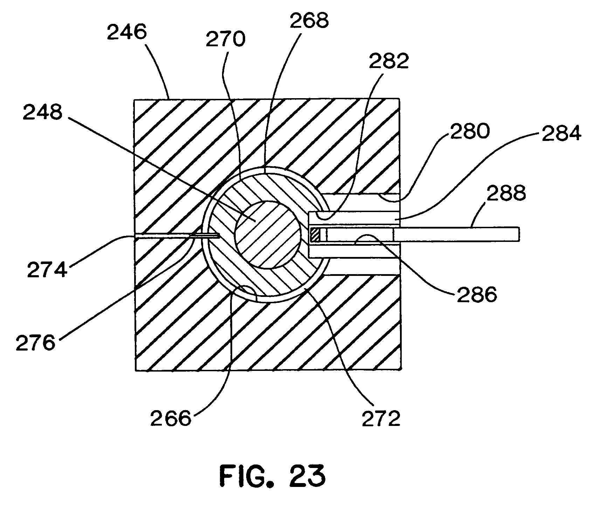

After lowering of support 212 to the position of Figure 22, the punch drive 254 is retracted to move the punch shaft and reverse punch from the position of Figure 22 up to the position of Figure 23. Upward movement of the trailing end 258 of the punch engages the inner portion of the neck flange of bottle 10 to sever the portion from the flange and form another plastic ring 214. This ring is moved up into the anvil passage to a position as shown in Figure 23 where the ring is friction-held between the anvil bore and the lower end 270 of insert 268.

Retraction of drive 254 also moves pin 298 up to rotate the hook member 288 about fixed pin 292 toward the punch shaft and move hook 296 out of engagement with the lead end of the previously severed ring and into groove 286. Compare Figures 22 and 23. After the hook has been moved out of engagement with the ring, the flattened arms of the ring extending between the lead portion and the severed trailing portion tend to expand and return the ring to its circular shape. This movement, combined with the flow of air past the freed ring and into the vacuum manifold draws the ring from the position shown in dotted lines in Figure 22 in passage 280 to the position shown in solid line in the vacuum manifold. The ring is now freed from the trimming apparatus 240 and is transported along the vacuum manifold and deposited in the collection receptacle.

Finally, support 212 is moved up by its drive to return the trimming apparatus to the position of Figure 19. Vertical movement of the punch shaft moves pin 298 up to the top of slot 202 so that the hook 296 is returned to the position of Figure 19 in groove 286 and in recess 264 slightly below the lead portion of the newly punched ring 214.

At this time, jaws 42 are opened to discharge the trimmed bottle 10. A new bottle 10 to be trimmed is positioned between the jaws and the jaws are closed on the bottle to hold the bottle in axial alignment with the reverse punch, thereby completing a full cycle of operation. The next and successive bottles are trimmed by repeating the previously-described cycle of operation.

Ring 214 is cut from the neck of bottle 10 without forming chips and is stripped from the trimming apparatus without forming chips or debris which could collect in the interior of bottle 10.

Trimming apparatus 240 has been described with punch shaft 248 oriented in a vertical position and clamp jaws 42 holding the neck of bottle 10 oriented vertically. Obviously, if desired, the trimming apparatus and clamp jaws may be oriented horizontally so that the punch shaft extends horizontally and the neck of the bottle held in the jaws is oriented horizontally. In this case, the manifold 216 is preferably located on the lower side of body 246 to facilitate discharge of stripped rings 214 to the manifold.

## Claims

1. Apparatus for trimming the inner edge of a flange (20) extending radially inwardly from the top of the neck of a plastic bottle (10), the apparatus being characterised by a reverse punch (50) mounted on the forward end of a punch shaft (48), the reverse punch (50) having a lead end (68), a trailing end (60) and a circumferential cutting edge (64) on the trailing end (60); a punch drive (52) engaging the punch shaft (48) for moving the punch into and out of the neck (12) of a plastic bottle (10) to cut a ring (88) of plastic from the inner edge of the neck (12), the ring (88) surrounding the punch shaft (48); and means for severing the ring (88) of plastic on the punch shaft (48).

2. Apparatus as claimed in claim 1, wherein the means for severing includes a cutting blade (82) for cutting the plastic ring (88).

3. Apparatus as claimed in claim 2, wherein the cutting blade (82) is located adjacent to the trailing end (60) of the reverse punch (50) when retracted.

4. Apparatus as claimed in claim 1 or 2, wherein said means for severing the ring includes a slot (156) in the punch shaft (148); a ring stripper (172) for removing the plastic ring (186) from the shaft (148), said stripper (172) being mounted in the slot (156) and including a cutter blade (178) and a ring member; a stripper drive (174); and a connection joining the stripper drive (174) to the stripper whereby the drive (174) moves the stripper between a retracted position where the cutter blade (178) is located away from the punch shaft (148) and the ring member (176) is located in the slot (156) and an extended position where the cutter blade (178) is located in the slot and the ring member is located away from the punch shaft.

5. Apparatus as claimed in claim 4, including a recess in the ring stripper (172) between the cutter blade and the ring member.

6. Apparatus as claimed in claim 4 or 5, wherein the slot (156) extends into the punch.

7. Apparatus as claimed in claim 4, 5, or 6, including a ring outlet passage (280), a vacuum manifold (216) surrounding the outlet passage (280), a vacuum source connected to the manifold (216) remote from the ring stripper, and an air port adjacent to the outlet passage.

8. Apparatus as claimed in claim 4, 5, 6, or 7, including a body (246) surrounding the punch shaft (248), a stripper passage in the body (246) and wherein the ring stripper comprises an elongate member having opposed ends and a side adjacent to the punch, said ring stripper being slidably mounted in a stripper passage in the body and the slot (274) and having a first end adjacent to the stripper passage, said ring member comprising a hook (296) facing outwardly from the punch shaft, said cutter blade (276) having an edge facing the slot.

9. Apparatus as in claim 8, wherein the stripper passage is straight and the drive (254) reciprocates the stripper back and forth in the stripper passage.

10. Apparatus as claimed in claim 1 or 2, wherein said means for severing the ring (214) includes a ring hook (296) and a drive (254) for moving the hook from a first position adjacent the punch shaft to a second position located away from the punch shaft.

11. Apparatus as claimed in claim 10, including a body (246) surrounding the punch shaft and defining a circular anvil bore (266), said first position being located in the anvil bore (260) and the second position being located outside the anvil bore (266).

12. A method of trimming a circular ring (88) from the neck (12) flange of a molded plastic bottle, comprising the following steps of:
A) positioning a reverse punch (56) on a punch shaft (48) outside the neck (12) of a plastic blow molded bottle (10);
B) extending the reverse punch (56) through the neck of the bottle (10) and into the interior of the bottle;
C) flexing the neck flange (12) into the bottle (10) and out of the path of insertion of the reverse punch (56);
D) withdrawing the reverse punch (56) from the interior of the bottle (10), cutting a ring (88) of plastic from the inner portion of the neck flange and removing the ring of plastic from the interior of the bottle on the punch shaft (48);
E) severing the ring (88) of plastic on the punch shaft; and
F) removing the severed ring (88) of plastic from the punch shaft.

13. The method as claimed in claim 12, including the step of cutting the ring of plastic (88).

14. The method as claimed in claim 13, including the step of moving a cutting blade (82) relative to the punch shaft (48) to engage and cut the ring of plastic (88).

15. The method as claimed in claim 12, 13 or 14, including the step of removing the ring (88) from the punch shaft in a single piece.

## Patentansprüche

1. Vorrichtung zum Ausschneiden der inneren Kante eines sich radial einwärts von der Oberkante des Halses einer Plastikflasche (10) erstreckenden Flansches (20), wobei die Vorrichtung gekennzeichnet ist durch ein an einem vorderen Ende eines Stanzschaftes (48) angebrachtes Umkehr-Stanzwerkzeug (50), wobei das Umkehr-Stanzwerkzeug (50) ein vorderes Ende (68) und ein hinteres Ende (60) und am hinteren Ende (60) eine rundumlaufende Schneidkante (64) aufweist; und einen mit dem Stanzschaft (48) verbundenen Stanzantrieb (52), um das Stanzwerkzeug in den Hals (12) einer Plastikflasche hinein und wieder heraus zu bewegen, um einen Ring (88) aus Plastik von der inneren Kante des Halses (12) abzuschneiden, wobei der Ring (88) den Stanzschaft (48) umgibt; und Mittel, um den Ring (88) aus Plastik auf dem Stanzschaft (48) zu durchtrennen.

2. Vorrichtung nach Anspruch 1, wobei das Mittel zum Durchtrennen ein Schneidmesser (82) zum Schneiden des Plastikringes (88) umfasst.

3. Vorrichtung nach Anspruch 2, wobei das Schneidmesser (82) benachbart zum hinteren Ende (60) des zurückgezogenen Umkehr-Stanzwerkzeugs (50) angeordnet ist.

4. Vorrichtung nach Anspruch 1 oder 2, wobei das Mittel zum Durchtrennen des Rings einen Schlitz (156) im Stanzschaft (148) umfasst; einen Ringabstreifer (172) zum Entfernen des Plastikringes (136) vom Schaft (148); wobei besagter Abstreifer (172) im Schlitz (156) angeordnet ist und ein Schneidmesser (178) und ein Ringteil umfasst; einen Abstreifermitnehmer (174), und eine Verbindung zum Verbinden des Abstreifermitnehmers (174) mit dem Abstreifer, wobei der Mitnehmer (174) den Abstreifer zwischen einer zurückgezogenen Position, in der das Schneidmesser (178) entfernt vom Stanzschaft (148) und das Ringteil (176) im Schlitz (156) angeordnet ist, und einer ausgefahrenen Position, in der das Schneidmesser (178) im Schlitz und das Ringteil entfernt vom Stanzschaft angeordnet ist, bewegt.

5. Vorrichtung nach Anspruch 4, welche zwischen dem Schneidmesser und dem Ringteil eine Ausnehmung im Ringabstreifer (172) umfasst.

6. Vorrichtung nach Anspruch 4 oder 5, wobei der Schlitz (156) sich in das Stanzwerkzeug hinein erstreckt.

7. Vorrichtung nach Anspruch 4, 5 oder 6, welche umfasst eine Ring-Durchlassöffnung (280), ein die Durchlassöffnung (280) umgebendes Vakuumansaugrohr (216), eine mit dem Ansaugrohr (216) verbundene, entfernt vom Ringabstreifer angeordnete Vakuumquelle, und einen an die Durchlassöffnung angrenzenden Luftschacht.

8. Vorrichtung nach Anspruch 4, 5, 6 oder 7, welche einen den Stanzschaft (248) umgebenden Körper (246) umfasst, einen Abstreiferdurchlass im Körper (246) und worin der Ringabstreifer ein langgestrecktes Teil mit sich gegenüberliegenden Enden und eine zum Stanzwerkzeug benachbarten Seite aufweist, wobei besagter Ringabstreifer in einem Abstreiferdurchlass im Körper verschiebbar angeordnet ist und der Schlitz (274) ein erstes, benachbart zum Abstreiferdurchlass liegendes Ende aufweist, wobei besagtes Ringteil einen Haken (296) umfasst, der vom Stanzschaft nach aussen weist, wobei besagtes Schneidmesser (176) eine zum Schlitz weisende Kante aufweist.

9. Vorrichtung nach Anspruch 8, wobei der Abstreiferdurchlass gerade ist und der Antrieb (254) den Abstreifer im Abstreiferdurchlass zurück und nach vorne bewegt.

10. Vorrichtung nach Anspruch 1 oder 2, wobei das Mittel zum Durchtrennen des Rings (214) einen Ringhaken (296) und einen Antrieb (254) zum Bewegen des Hakens von einer ersten, zum Stanzschaft benachbarten Position zu einer zweiten, vom Stanzschaft entfernten Position.

11. Vorrichtung nach Anspruch 10, welche einen den Stanzschaft umgebenden Körper (246) umfasst, der eine kreisförmige Blockbohrung (266) ausbildet, wobei besagte erste Position in der Blockbohrung (266) und die zweite Position ausserhalb der Blockbohrung (266) angeordnet ist.

12. Verfahren zum Ausschneiden eines kreisförmigen Ringes (88) vom Halsflansch (12) einer blasgeformten Plastikflasche, welches die folgenden Schritte umfasst:
A) Positionieren eines Umkehr-Stanzwerkzeuges (56) auf einem Stanzschaft (48) ausserhalb des Halses (12) einer blasgeformten Plastikflasche (10);
B) Einführen des Umkehr-Stanzwerkzeuges (56) durch den Hals der Flasche (10) und in das Innere der Flasche;
C) Verbiegen des Halsflansches (12) in die Flasche (10) hinein und weg vom Pfad des Einführens des Umkehr-Stanzwerkzeuges (56);
D) Entfernen des Umkehr-Stanzwerkzeuges (56) aus dem Inneren der Flasche (10), Ausschneiden eines Plastikrings (88) vom inneren Teil des Halsflansches und Entfernen des Plastikrings auf dem Stanzschaft (56) aus dem Inneren der Flasche;
E) Durchtrennen des Plastikrings (88) auf den Stanzschaft; und
F) Entfernen des durchtrennten Plastikrings (88) vom Stanzschaft.

13. Verfahren nach Anspruch 12, welches den Schritt des Schneidens des Plastikrings (88) umfasst.

14. Verfahren nach Anspruch 13, welches den Schritt des Bewegens eines Schneidmessers (32) relativ zum Stanzschaft (48) umfasst, um den Plastikring (88) zu erfassen und zu schneiden.

15. Verfahren nach einem der Ansprüche 12, 13 oder 14, welches den Schritt des Entfernens des Rings (88) vom Stanzschaft in einem ganzen Stück umfasst.

## Revendications

1. Appareil pour détourer le bord interne d'une bride s'étendant radialement vers l'intérieur à partir de l'extrémité du goulot d'une bouteille en plastique (10), l'appareil étant caractérisé par un poinçon négatif (50) monté sur l'extrémité avant d'un arbre de poinçon (48), le poinçon négatif (50) ayant une extrémité avant (63), une extrémité arrière (60) et un bord de coupe circonférentiel (64) sur l'extrémité arrière (60) ; un dispositif d'entraînement de poinçon (52) en prise avec l'arbre de poinçon (48) pour déplacer le poinçon dans et hors du goulot (12) d'une bouteille en plastique (10) pour couper un anneau (88) de plastique du bord interne du goulot (12), l'anneau (88) entourant l'arbre de poinçon (48) ; et des moyens pour séparer l'anneau (88) de plastique sur l'arbre de poinçon (48).

2. Appareil selon la revendication 1, dans lequel les moyens pour séparer comprennent une lame de coupage (82) pour couper l'anneau en plastique (88).

3. Appareil selon la revendication 2, dans lequel la lame de coupage (82) est adjacente à l'extrémité arrière (60) du poinçon négatif (50) lorsque rétractée.

4. Appareil selon la revendication 1 ou 2, dans lequel lesdits moyens pour séparer l'anneau comprennent une fente (156) dans l'arbre de poinçon (148) ; un arracheur d'anneau (172) pour retirer l'anneau en plastique (136) de l'arbre (148), ledit arracheur (172) étant monté dans la fente (156) et comprenant une lame de coupeur (178) et un élément d'anneau ; un dispositif d'entraînement d'arracheur (174) et une connexion reliant le dispositif d'entraînement d'arracheur (174) à l'arracheur de sorte que le dispositif d'entraînement (174) déplace l'arracheur entre une position rétractée où la lame de coupeur (178) est située en éloignement de l'arbre de poinçon (148) et l'élément d'anneau (176) est situé dans la fente (156), et une position étendue dans laquelle la lame de coupeur (178) est située dans la fente et l'élément d'anneau est situé en éloignement de l'arbre de poinçon.

5. Appareil selon la revendication 4, comprenant un évidement dans l'arracheur d'anneau (172) entre la lame de coupeur et l'élément d'anneau.

6. Appareil selon la revendication 4 ou 5, dans lequel la fente (156) s'étend dans le poinçon.

7. Appareil selon la revendication 4, 5 ou 6, comprenant un passage de sortie d'anneau (280), un collecteur de vide (216) entourant le passage de sortie (280), une source de vide connectée au collecteur (216) qui est éloigné de l'arracheur d'anneau, et un port d'air adjacent au passage de sortie.

8. Appareil selon la revendication 4, 5, 6 ou 7, comprenant un corps (246) entourant l'arbre de poinçon (248), un passage d'arracheur dans le corps (246), et dans lequel l'arracheur d'anneau comprend un élément allongé ayant des extrémités opposées et un côté adjacent au poinçon, ledit arracheur d'anneau étant monté de manière coulissante dans un passage d'arracheur dans le corps et la fente (274) et ayant une première extrémité adjacente au passage d'arracheur, ledit élément d'anneau comprenant un crochet (296) tourne vers l'extérieur à partir de l'arbre de poinçon, ladite lame de coupeur (276) ayant un bord tourné vers la fente.

9. Appareil selon la revendication 8, dans lequel le passage d'arracheur est rectiligne et le dispositif d'entraînement (254) déplace l'arracheur en va-et-vient d'avant en arrière dans le passage d'arracheur.

10. Appareil selon la revendication 1 ou 2, dans lequel lesdits moyens pour séparer l'anneau (214) comprennent un crochet d'anneau (296) et un dispositif d'entraînement (254) pour déplacer le crochet à partir d'une première position adjacente à l'arbre de poinçon vers une seconde position située en éloignement de l'arbre de poinçon.

11. Appareil selon la revendication 10, comprenant un corps (246) entourant l'arbre de poinçon et définissant un alésage d'enclume circulaire (266), ladite première position étant située dans l'alésage d'enclume (260) et la seconde position étant située en dehors de l'alésage d'enclume (266).

12. Procédé pour détourer un anneau circulaire (28) à partir de la bride de goulot (12) d'une bouteille en plastique moulée, comprenant les étapes suivantes :
A) positionner un poinçon négatif (56) sur un arbre de poinçon (48) à l'extérieur du goulot (12) d'une bouteille plastique soufflée moulée (10) ;
B) étendre le poinçon négatif (56) à travers le goulot de la bouteille (10) et à l'intérieur de la bouteille ;
C) plier la bride de goulot (12) dans la bouteille (10) et hors du passage d'insertion du poinçon négatif (56) ;
D) retirer le poinçon négatif (56) de l'intérieur de la bouteille (10), couper un anneau (88) de plastique de la partie interne de la bride de goulot et retirer l'anneau de plastique de l'intérieur de la bouteille sur l'arbre de poinçon (48) ;
E) séparer l'anneau (88) de plastique sur l'arbre de poinçon ; et
F) retirer l'anneau séparé (88) de plastique de l'arbre de poinçon.

13. Procédé selon la revendication 12, comprenant l'étape de couper l'anneau de plastique (88).

14. Procédé selon la revendication 13, comprenant l'étape de déplacer une lame de coupage (82) par rapport à l'arbre de poinçon (48) pour la mettre en prise et couper l'anneau de plastique (88).

15. Procédé selon la revendication 12, 13 ou 14, comprenant l'étape de retirer l'anneau (88) de l'arbre de poinçon d'une seule pièce.
